# EUROPÄISCHE PATENTANMELDUNG

(11) **EP 0 850 599 A1**
(43) Veröffentlichungstag der Anmeldung: **01.07.1998**
(21) Anmeldenummer: 97890247.6
(22) Anmeldetag: 15.12.1997
(51) Int. Cl.: A61C 1/14

(54) **Werkzeughalter für ein dentales Handstück**

(30) Priorität: 18.12.1996 AT 2220/96
(71) Anmelder: DENTALWERK BÜRMOOS GESELLSCHAFT M.B.H., 5111 Bürmoos (AT)
(72) Erfinder: Schatz, Norbert, Ing., 5111 Bürmoos (AT)
(74) Vertreter: Patentanwälte BARGER, PISO & PARTNER

(57) **Zusammenfassung**

Die Erfindung betrifft eine Werkzeugspannvorrichtung (4) für ein dentales bzw. chirurgisches Handstück für Werkzeuge, deren Schaft (13) abgeflacht ist, und die eine Ringnut (16) aufweisen, wobei die Werkzeugspannvorrichtung (4) aus einer im wesentlichen hohlzylindrischen Welle (1) besteht, die an einem Ende eine mit der Abflachung (15) des Werkzeugschaftes korrespondierende Abplattung (5) der Durchgangsöffnung aufweist und an diesem Ende eine federnde Zunge (7) trägt, deren Verankerungsnase (6) mit der Ringnut (16) des Werkzeugschaftes zusammenwirkt.

Die Erfindung ist dadurch gekennzeichnet, daß
die federnde Zunge (7) mit der hohlzylindrischen Welle (1) einstückig ausgebildet und gegebenenfalls geschlitzt ist und der Abplattung (5) im wesentlichen diametral gegenüberliegt, und daß
die Abplattung (5) eine Anschlagfläche (19) aufweist, die mit einer Schulter (19') der Schaftabflachung (15) des Werkzeuges zusammenwirkt und so dessen Einstecktiefe bestimmt.

Weiters betrifft die Erfindung Werkzeugspannvorrichtungen mit zwei federnden Zungen und Verfahren zur Herstellung derartiger Vorrichtungen.

## Beschreibung

Die Erfindung betrifft einen Werkzeughalter für ein dentales Handstück für Werkzeuge, deren Schaft einerseits entlang einer Sehne des Schaftquerschnittes abgeflacht sind, um so das Drehmoment zu übertragen und die andererseits eine Ringnut aufweisen, durch die die axiale Fixierung im Werkzeughalter gegeben ist, wobei die Werkzeugspannvorrichtung aus einer im wesentlichen hohlzylindrischen Welle besteht, die an ihrem der Einstecköffnung für den Werkzeugschaft abgewandten Ende eine mit der Abflachung des Werkzeugschaftes korrespondierende Abplattung der Durchgangsöffnung aufweist und an diesem Ende zumindest eine federnde Zunge trägt, die mit der Ringnut des Werkzeuges zusammenwirkt.

Derartige Werkzeugschäfte und die zugehörigen Werkzeughalter sind seit langem bekannt und beispielsweise in der DE 659 680 A, zurückgehend auf eine Anmeldung aus 1933, beschrieben.

Jüngere Halterungen sind beispielsweise aus der EP-0 037 021 A und den in dieser Druckschrift genannten früheren Druckschriften bekannt.

Insbesondere hingewiesen werden soll auf die allerdings nicht gattungsgemäße US 4 014 099 A, bei der die das Werkzeug aufnehmende Welle am oberen, dem Werkzeugaustritt abgewandten Ende eine elastisch ausgebildete, in die Ringnut des Werkzeugschaftes eingreifende Rastnase aufweist, wodurch ein axiales Entgleiten des Werkzeuges, z.Bsp. zufolge seines Eigengewichtes, verhindert wird. Da die Konstruktion sowohl der Spannvorrichtung als auch des Handstückkopfes nicht geeignet ist, einen Druckknopf zur Freigabe des Werkzeuges anzubringen, muß die elastische Rastnase durch axiale Zugkraft auf das Werkzeug betätigbar sein, was nur geringste Haltekräfte durch die Rastnase erlaubt.

Zur Drehmomentübertragung ist ein weiterer Vorsprung vorgesehen. Dieser Vorsprung, der in axialer Richtung gesehen, nur im Bereich der Umfangsnut des vollständig eingeschobenen Werkzeuges ausgebildet ist, kommt aber nicht bereits beim Einschieben des Werkzeuges, sondern erst bei Verdrehung des Werkzeuges gegenüber der Aufnahmewelle mit entsprechenden Flächen des Werkzeuges in Eingriff, wobei durch dieses Verdrehen die eigentliche, formschlüssige axiale Sicherung erfolgt.

Zur Entnahme des Werkzeuges muß dieses daher zunächst gegenüber der Welle in die "Nullposition" gedreht und dann mit einer bestimmten, der Haltekraft entsprechenden, Axialkraft nach außen gezogen werden, wobei zum Verdrehen von Werkzeug und Spannhülse die Welle festzuhalten ist.

Es ist leicht einsichtig, daß die Prozedur des Fixierens der Spannhülse gegen Verdrehen, das Erreichen der richtigen Winkellage des Werkzeuges gegenüber der Spannhülse und das anschließende Herausziehen des Werkzeuges ohne weiteres Verdrehen (dies führte ja erneut zu einer formschlüssigen Fixierung des Werkzeuges) eine Prozedur ist, die mühselig und beschwerlich ist.

Die oben genannte EP-0 037 021 A, in der die US-A ebenfalls genannt wird, vermeidet diese Nachteile, indem sie einen druckknopfbetätigten Klemmhülsenmechanismus schafft, der die genannten Nachteile der US-A nicht aufweist. Es ist aber dieser aus der EP-A bekannte Halterungsmechanismus aus zumindest drei Teilen aufgebaut, die alle mit der für Dentalinstrumente üblichen Präzision und Akribie hergestellt und zusammengebaut werden müssen, was kostspielig ist, wobei durch die Vielteiligkeit auch ein merklicher Platzbedarf besteht.

Eine weitere vorbekannte Werkzeugspannvorrichtung wird an Hand der Fig. 1 und Fig. 2 der beiliegenden Zeichnung näher erläutert, wobei ein üblicher Werkzeugschaft aus Fig. 5 ersichtlich ist. Dieser Werkzeugschaft 13 weist eine Abflachung 15 zur Drehmomentübertragung und eine Ringnut 16 zur axialen Sicherung auf.

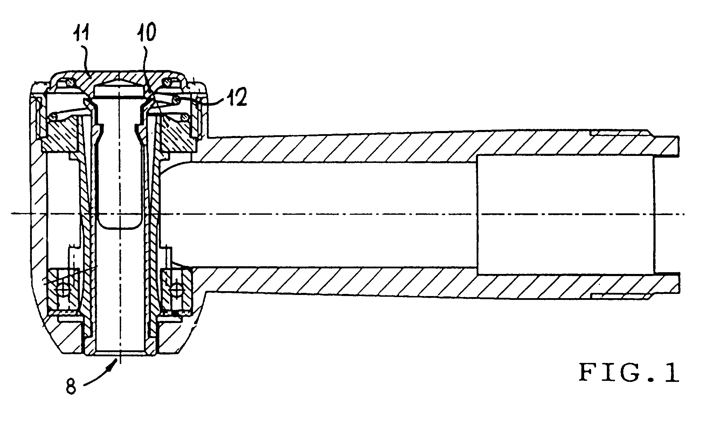

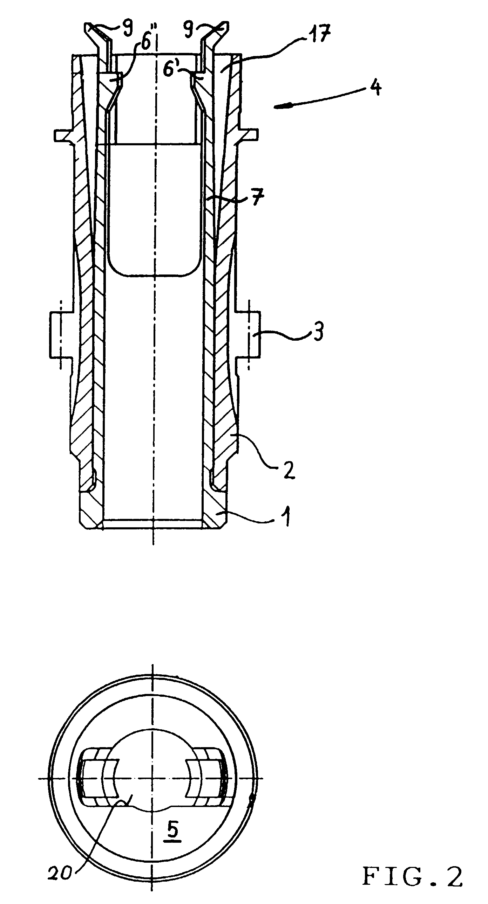

Eine im wesentlichen hohlzylindrische Welle 1 steckt in einer Zylinderhülse 2, die in die Innenringe der Kugellager (Fig. 1) eingesetzt wird und auch eine Verzahnung 3 zum Antrieb des Werkzeughalters trägt. Wie aus der Draufsicht der Fig. 2 entnommen werden kann, weist die Zylinderhülse 2 einen oberen Abschnitt 4 auf, in dem ihr sie in Längsrichtung durchsetzender Hohlraum nicht zylindrisch ausgebildet ist, sondern entlang einer Sekante des Innenmantels abgeschnitten ist und eine Abplattung 5 bildet, deren Mitnahmefläche 20 mit der korrespondierenden Abflachung 15 des Werkzeugschaftes 13 zusammenwirkt, wodurch das Drehmoment übertragen wird.

Die axiale Halterung des Werkzeugschaftes 13 wird durch zwei Verankerungsnasen 6', 6" gesichert, die auf jeweils einer federnden Zunge 7 sitzen, die aus dem Material der hohlzylindrischen Welle 1 durch Entfernen der umliegenden Wellenteile ausgebildet sind und mit der Ringnut 16 des Werkzeugschaftes zusammenwirken.

Die federnden Zungen 7 tragen an ihrem obersten, dem Einsteckende 8 (Fig. 1) abgewandten Ende Vorsprünge 9, die, wie aus Fig. 1 ersichtlich, mit einem nach unten ragenden Abschnitt 10 eines Betätigungsdruckknopfes 11 so zusammenwirken, daß beim Niederdrücken des Druckknopfes 11 gegen die Kraft einer Feder 12 die federnden Zungen 7 radial nach außen gespreizt werden, wodurch die Verankerungsnasen 6', 6", radial gesehen, aus der Ringnut 16 des Werkzeugschaftes 13 treten und es dem Benutzer ermöglichen, das Werkzeug ohne besondere Kraftanwendung aus dem Werkzeughalter zu ziehen.

Um die Oberflächen, die die federnden Zungen 7 definieren, zu schaffen, ist eine relativ komplizierte Abfolge von Bearbeitungsschritten notwendig, darüberhinaus ist es, um Raum für das Ausfedern der Zungen 7 zu schaffen, notwendig eine weitere, nämlich die außen anliegende Zylinderhülse 2 mit kegeligen Nuten 17 im oberen Bereich mit entsprechend engen Toleranzen herzustellen und aufzubringen. Die kegeligen Nuten können bei den gegebenen Maßen nur mittels Funkenerosion geschaffen werden, was aber das "Einfädeln" des Drahtes notwendig macht, wodurch die Herstellung wesentlich kompliziert und verteuert wird.

Wegen der Doppelwandigkeit der zusammengebauten Hülse ist die mechanische Festigkeit merklich geringer als bei einer einstückigen Ausbildung mit gleichen Abmessungen.

Die Erfindung zielt gegenüber diesem Stand der Technik darauf ab, eine Werkzeugspannvorrichtung für Werkzeuge der eingangs genannten Art zu schaffen, die die Nachteile der vorbekannten Werkzeughalterungen nicht aufweist und die insbesondere kostengünstig und trotzdem mit engen Toleranzen hergestellt werden kann.

Erfindungsgemäß wird dies in einer ersten Variante dadurch erreicht, daß eine mit der hohlzylindrischen Welle einstückig ausgebildete federnde Zunge der Abplattung im wesentlichen diametral gegenüberliegt und daß die Abplattung eine Anschlagfläche aufweist, die mit der Schaftabplattung zusammenwirkt, um die Einstecktiefe des Werkzeuges zu bestimmen.

Erfindungsgemäß wird dies in einer zweiten Variante dadurch erreicht, daß zwei mit der hohlzylindrischen Welle einstückig ausgebildete federnde Zungen im wesentlichen symmetrisch zur Abplattung ihr schräg gegenüberliegend vorgesehen sind und daß die Abplattung eine Anschlagfläche aufweist, die mit der Schaftabplattung zusammenwirkt, um die Einstecktiefe des Werkzeuges zu bestimmen. Dabei ist es möglich, entweder eine breite, praktisch starre Zunge durch einen achsparallelen Schlitz in zwei federnde Zungen zu teilen, oder zwei voneinander unabhängige Zungen vorzusehen. Im ersten Fall kann das nachfolgend geschilderte Verfahren zur Herstellung ohne Adaptierungen angewandt werden, im zweiten Fall muß das Werkstück während der Herstellung zweimal verdreht werden.

Die Erfindung betrifft auch ein Verfahren zur Herstellung einer solchen Werkzeughalterung, das darin besteht, einen vollzylindrischen Rohling, der die entsprechenden drehsymmetrischen Außenkonturen aufweist, mit einer Sackbohrung zu versehen, zwei achsparallele, die Seiten der federnden Zunge definierenden Schlitze zu sägen oder fräsen und sodann mittels Funkenerosion in einem Arbeitsgang die Kontur der Abplattung, der inneren Oberfläche und schließlich der äußeren Oberfläche der federnden Zunge samt den benachbarten Gebieten des Rohlings zu schaffen, wobei der verwendete Draht während des Arbeitsvorganges stets sowohl in einer Ebene normal zur Achse des Rohlings als auch parallel zu der Ebene, die durch die Mitnahmefläche der Abplattung definiert wird, liegt.

Eine weitere Ausgestaltung, bei der der Rohling bezüglich des Drahtes entsprechend verdreht wird, ermöglicht die Herstellung erfindungsgemäßer Werkzeughalter mit zwei schräg gestellten federnden Zungen.

Die Erfindung wird anhand der Zeichnung näher erläutert. Dabei zeigt
die Fig. 1 einen Handstückkopf mit einer Werkzeughalterung gemäß dem Stand der Technik,
die Fig. 2 die Werkzeughalterung der Fig. 1 im Axialschnitt und in Draufsicht,

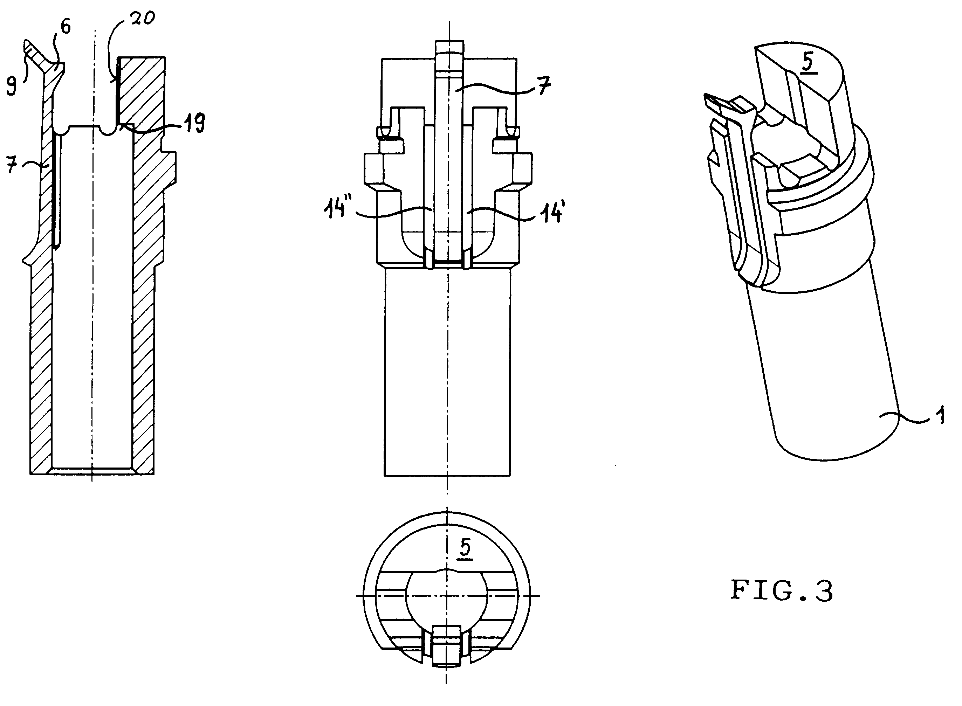

die Fig. 3 eine erfindungsgemäße Werkzeughalterung in Schnitt, Ansicht, Draufsicht, und axonometrischer Ansicht,

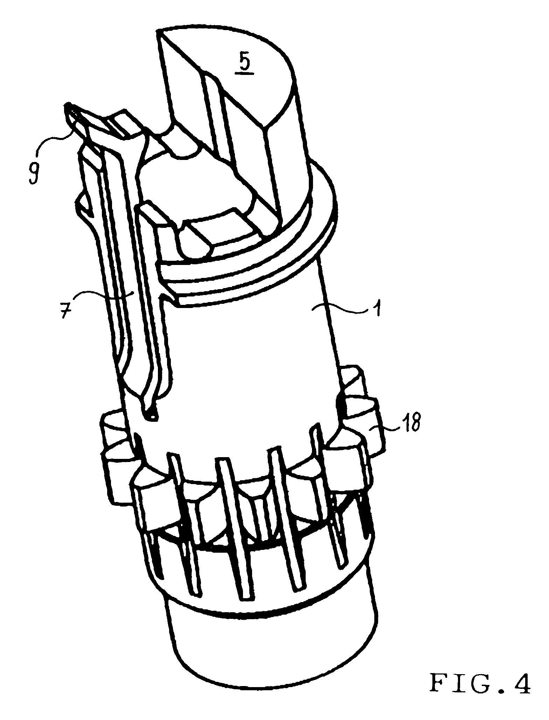

die Fig. 4 eine erfindungsgemäße Variante mit Verzahnung in axonometrischer Ansicht,

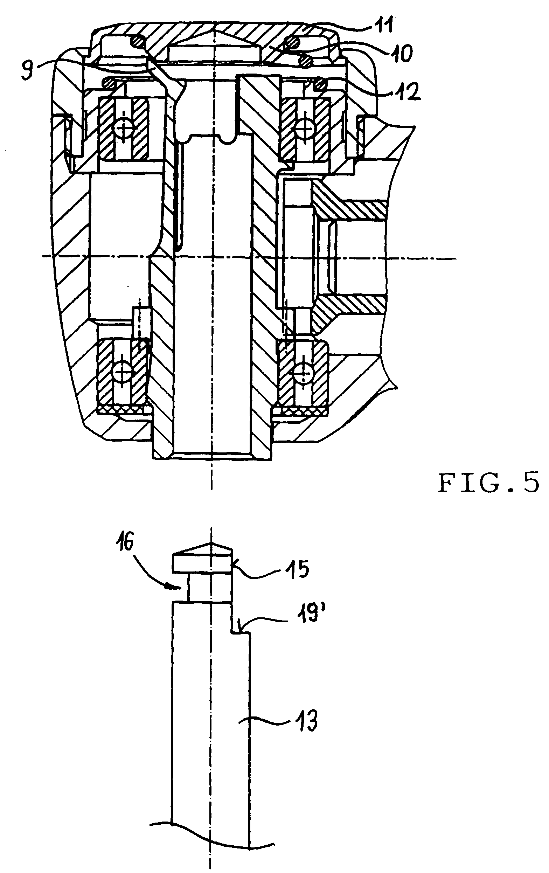

die Fig. 5 die Variante gemäß Fig. 4, eingebaut in einen Handstückkopf samt zugehörigem, aber nicht eingestecktem Werkzeug,

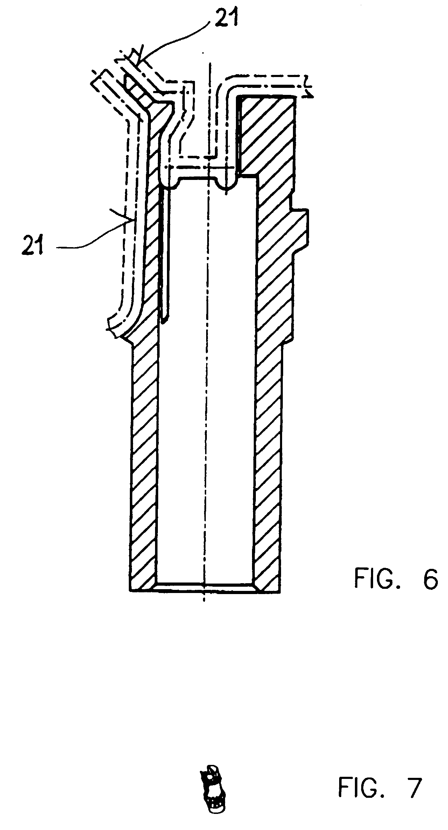

die Fig. 6 eine Ansicht gemäß dem Schnitt in Fig. 3 mit eingezeichneter Führung des Erosionsdrahtes und
die Fig. 7 eine Ansicht gemäß der Fig. 4 in wahrer Größe.

Wie aus Fig. 3 ersichtlich, ist eine federnde Zunge 7 diametral einer Abplattung 5 bzw. deren Mitnahmefläche 20 gegenübergestellt. Die federnde Zunge 7 entspricht in ihrer Form und ihren Abmessungen im wesentlichen den federnden Zungen 7 gemäß Fig. 2, sodaß die radiale und axiale Lage der Verankerungsnase 6 und der Steuerfläche 9 den Lagen der entsprechenden Teile der vorbekannten Ausführung entspricht. Die Umfangslage zwischen der federnden Zunge 7 und der Abflachung 5 ist aber anders als beim Stand der Technik, was unerwartete Vorteile mit sich bringt, wie dies weiter unten erläutert wird.

Die in Fig. 3 dargestellte Ausführungsform eignet sich besonders günstig für folgendes Herstellungsverfahren: Schlitze 14', 14" zu beiden Seiten der federnden Zunge 7 werden entlang Erzeugender in die mit einem Sackloch versehene zylindrische Welle 1 gesägt. Alternativ können diese Schlitze mittels Funkenerosion geschaffen werden, wobei auch in der Abflachung 5 analoge Schlitze erodiert werden, was aber die Funktionsfähigkeit nicht beinträchtigt.

Sodann werden mittels Funkenerosion durch entsprechendes Führen des Drahtes der Funkenerosionsmaschine entlang der im Schnitt der Fig. 3 projezierend erscheinenden Flächen (strichpunktierte Linie 21 in Fig. 6), die anderen Oberflächen der Zunge 7 und der sie umgebenden hohlzylindrischen Welle 1 ausgearbeitet.

Dabei kann der verwendete Draht stets an beiden Enden eingespannt sein und auch bleiben, da er nirgendwo eingefädelt werden muß, wodurch die Arbeitsgeschwindigkeit, verglichen mit den Herstellungsverfahren gemäß dem Stand der Technik, deutlich erhöht wird.

Bei Verwendung eines Laserstrahles hat dieser bei der Durchführung des Verfahrens die Position des Drahtes beim Funkenerosionsverfahren einzunehmen.

Um die Probleme, die sich beim Handhaben des Werkstückes ergeben, zu verdeutlichen, ist in Fig. 7 ein erfindungsgemäßer Werkzeughalter gemäß Fig. 4 in wahrer Größe dargestellt. Es ist leicht ersichtlich, daß auch bei Benutzung moderner Bearbeitungsmaschinen jede Verbesserung des Herstellungsverfahrens, insbesondere, wenn dabei Umspannvorgänge oder gar Einfädelvorgänge entfallen, von großer ökonomischer Bedeutung sind.

Der Rohling, aus dem die erfindungsgemäße Werkzeughalterung hergestellt wird, wird aus dem Vollen zuerst in seinen drehsymmetrischen Außenkonturen gedreht, gefräst oder geschliffen. Dabei weist er am oberen Ende eine kegelige oder zylindrische Ausbildung auf, aus der später die Steuerfläche 9 entsteht.

Sodann wird eine Sackbohrung geschaffen, durch die der axiale Anschlag festgelegt wird, und die beiden Schlitze 14', 14" werden gesägt. Schließlich wird durch Funkenerosion oder auch durch Laserschneiden die endgültige Form hergestellt.

Die Fig. 4 zeigt eine Variante der erfindungsgemäßen Werkzeughalterung, bei der die Hohlzylindrische Welle 1 einstückig mit einer Verzahnung 18 zum Antrieb des Werkzeuges ausgebildet ist. Durch die Einstückigkeit wird Platz gespart und die erzielbare Herstellungsgenauigkeit weiter erhöht, ohne daß spezielle Fertigungsmaßnahmen getroffen werden müssen.

Fig. 5 zeigt einen Kopf eines dentalen Handstückes mit einer erfindungsgemäß ausgebildeten Werkzeugaufnahme. Wie aus einem Vergleich mit Fig. 1 ersichtlich, kann die erfindungsgemäße Werkzeughalterung verwendet werden, ohne daß an anderen Teilen des Handstückkopfes Änderungen nötig sind. Diese Kompatibilität ist für die Lagerhaltung und die Kunden sehr vorteilhaft.

Wie aus dieser Figur ersichtlich, können die Wälzlager mit ihren Innenringen direkt auf die Welle 1 aufgesetzt werden, wenn auch im Bereich der federnden Zunge 7 der Innenring keinen Kontakt mit der Welle 1 hat, ist dennoch genügend Führungsfläche vorhanden.

Der ebenfalls in Fig. 5 gezeigte Werkzeugschaft ist in Einsteckposition dargestellt, in der Praxis wird er einfach eingesteckt und unter leichtem Druck solange verdreht, bis er die zur momentanen Winkellage der Werkzeughalterung passende Winkellage aufweist und sich endgültig in die Werkzeughalterung einschieben läßt. Dabei kommt die Schulter 19' zum Anschlag auf die Anschlagfläche 19 der Werkzeugspannvorrichtung und definiert so die axiale Lage des Werkzeuges.

Die Erfindung ist nicht auf die gezeigten Ausführungsbeispiele beschränkt, sondern kann verschiedentlich abgewandelt werden. So ist es insbesondere möglich, die Außenform der Hohlwelle 1 an den jeweils verwendeten Handstückkopf anzupassen. Zur Verbesserung der Massenverteilung kann der äußere Teil der Abflachung 5 entfernt werden, sodaß sie nur aus einer Art Wand, die entlang einer Sekante des Kreisquerschnittes verläuft, besteht.

Es ist auch nicht absolut notwendig, daß die federnde Zunge 7, wenn nur eine vorhanden ist, der Abplattung 5 genau gegenüber liegt, wenn dies auch wegen der Massenverteilung und der Reduzierung der Spannvorgänge des Werkstückes bevorzugt wird.

## Patentansprüche

1. Werkzeugspannvorrichtung (4) für ein dentales bzw. chirurgisches Handstück für Werkzeuge, deren Schaft (13) einerseits entlang einer Sehne des Schaftquerschnittes abgeflacht ist, und die andererseits eine Ringnut (16) aufweisen, wobei die Werkzeugspannvorrichtung (4) aus einer im wesentlichen hohlzylindrischen Welle (1) besteht,
die an ihrem der Einstecköffnung für den Werkzeugschaft (13) abgewandten Ende eine mit der Abflachung (15) des Werkzeugschaftes korrespondierende Abplattung (5) der Durchgangsöffnung aufweist und an diesem Ende eine federnde Zunge (7) trägt, deren Verankerungsnase (6) mit der Ringnut (16) des Werkzeugschaftes zusammenwirkt, dadurch gekennzeichnet, daß
die federnde Zunge (7) mit der hohlzylindrischen Welle (1) einstückig ausgebildet und gegebenenfalls geschlitzt ist und der Abplattung (5) im wesentlichen diametral gegenüberliegt, und daß
die Abplattung (5) eine Anschlagfläche (19) aufweist, die mit einer Schulter (19') der Schaftabflachung (15) des Werkzeuges zusammenwirkt und so dessen Einstecktiefe bestimmt.

2. Werkzeugspannvorrichtung (4) für ein dentales bzw. chirurgisches Handstück für Werkzeuge, deren Schaft (13) einerseits entlang einer Sehne des Schaftquerschnittes abgeflacht ist, und die andererseits eine Ringnut (16) aufweisen, wobei die Werkzeugspannvorrichtung (4) aus einer im wesentlichen hohlzylindrischen Welle (1) besteht,
die an ihrem der Einstecköffnung für den Werkzeugschaft (13) abgewandten Ende eine mit der Abflachung (15) des Werkzeugschaftes korrespondierende Abplattung (5) der Durchgangsöffnung aufweist und an diesem Ende eine federnde Zunge (7) trägt, deren Verankerungsnase (6) mit der Ringnut (16) des Werkzeugschaftes zusammenwirkt, dadurch gekennzeichnet, daß
zwei mit der hohlzylindrischen Welle einstückig ausgebildete federnde Zungen im wesentlichen symmetrisch zur Abplattung schräg gegenüberliegend vorgesehen sind und
daß die Abplattung eine Anschlagfläche aufweist, die mit der Schaftabplattung zusammenwirkt, um die Einstecktiefe des Werkzeuges zu bestimmen.

3. Verfahren zur Herstellung einer Werkzeugspannvorrichtung (4) gemäß Anspruch 1, dadurch gekennzeichnet, daß es aus den folgenden Schritten besteht:
a) ein vollzylindrischer Rohling, der die entsprechenden drehsymmetrischen Außenkonturen aufweist, wird mit einer Sackbohrung versehen,
b) zwei achsparallele, die Seiten der federnden Zunge definierende Schlitze und gegebenenfalls der die Zunge teilende Mittelschlitz werden in die Mantelfläche gesägt oder gefräst und
c) sodann wird, bevorzugt mittels Funkenerosion oder Laserschneiden in einem Arbeitsgang die Kontur der Abplattung (5), der inneren Oberfläche und schließlich der äußeren Oberfläche der federnden Zunge (7) samt den benachbarten Gebieten des Rohlings geschaffen, wobei bei der Verwendung von Funkenerosion der verwendete Draht und beim Laserschneiden der Laserstrahl während dieses Arbeitsganges stets sowohl in einer Ebene normal zur Achse des Rohlings als auch parallel zu der Ebene, die durch die Mitnahmefläche (20) der Abplattung (5) definiert wird, liegt.

4. Verfahren zur Herstellung einer Werkzeugspannvorrichtung (4) gemäß Anspruch 2, dadurch gekennzeichnet, daß es aus den folgenden Schritten besteht:
a) ein vollzylindrischer Rohling, der die entsprechenden drehsymmetrischen Außenkonturen aufweist, wird mit einer Sackbohrung versehen,
b) drei oder vier achsparallele, die Seiten der federnden Zungen definierende Schlitze werden in die Mantelfläche gesägt oder gefräst, im Falle von vier schlitzen wird das zwischen den mittleren Schlitzen befindliche Mantelmaterial entfernt und
c) sodann wird, bevorzugt mittels Funkenerosion oder Laserschneiden in jeweils einem Arbeitsgang die Kontur der Abplattung (5), und der inneren Oberflächen und schließlich der äußeren Oberflächen der federnden Zungen (7) samt den benachbarten Gebieten des Rohlings geschaffen, wobei bei der Verwendung von Funkenerosion der verwendete Draht und beim Laserschneiden der Laserstrahl während dieses Arbeitsganges
d) zuerst sowohl in einer Ebene normal zur Achse des Rohlings als auch parallel zu der Ebene, die durch die Mitnahmefläche (20) der Abplattung (5) definiert wird, liegt,
e) sodann sowohl in einer Ebene normal zur Achse des Rohlings als auch parallel zu den Ebenen, die durch die Winkelstellung der Zungen vorgegeben werden, liegt.
